# DEMANDE DE BREVET EUROPEEN

(11) **EP 1 441 429 A1**
(43) Date de publication de la demande: **28.07.2004**
(21) Numéro de dépôt: 04354002.0
(22) Date de dépôt: 20.01.2004
(51) Int. Cl.: H02H 3/33

(54) **Dispositif de protection differentielle et appareil de coupure electrique comportant un tel dispositif**

(30) Priorité: 24.01.2003 FR 0300806
(71) Demandeur: SCHNEIDER ELECTRIC INDUSTRIES SAS, 92500 Rueil Roosevelt (FR)
(72) Inventeur: Lambardin, Sylvie c/o Schneider Electric Ind. SAS, 38050 Grenoble Cedex 09 (FR); Tian, Simon c/o Schneider Electric Ind. SAS, 38050 Grenoble Cedex 09 (FR)
(74) Mandataire: Tripodi, Paul

(57) **Abrégé**

Le dispositif de protection différentielle comporte une entrée destinée à être connectée à un tore (1) de mesure, un comparateur (9) pour comparer un signal (8) représentatif d'un courant différentiel à un seuil de référence, et un circuit de traitement (10) pour commander un relais (5) de déclenchement de l'ouverture de contacts principaux (3) lorsqu'un défaut différentiel est détecté. Le dispositif comporte aussi un redresseur de signal (20) recevant au moins un signal (8) représentatif d'un courant différentiel (Id), un filtre (22, 43, 42, 55) connecté au redresseur pour fournir un signal (23) redressé filtré audits moyens de comparaison (9). L'appareil de coupure électrique comporte des conducteurs principaux (2) et des contacts (31) connectés en série, le tore (1) de mesure de courant différentiel (Id), le relais (5), et un dispositif de protection différentielle à filtre adapté connecté au tore et au relais de déclenchement.

## Description

### DOMAINE TECHNIQUE

L'invention concerne un dispositif de protection différentielle comportant une entrée destinée à être connectée à un tore de mesure de courant différentiel, des moyens de comparaison pour comparer un signal représentatif d'un courant différentiel à un seuil de référence, et des moyens de traitement pour commander un relais de déclenchement de l'ouverture de contacts principaux lorsqu'un défaut différentiel est détecté. L'invention concerne aussi un appareil de coupure électrique comportant des conducteurs principaux et des contacts connectés en série, un tore de mesure de courant différentiel entourant les conducteurs principaux, un relais de déclenchement de l'ouverture desdits contacts principaux, et un dispositif de protection différentielle connecté au tore et au relais de déclenchement.

### ETAT DE LA TECHNIQUE

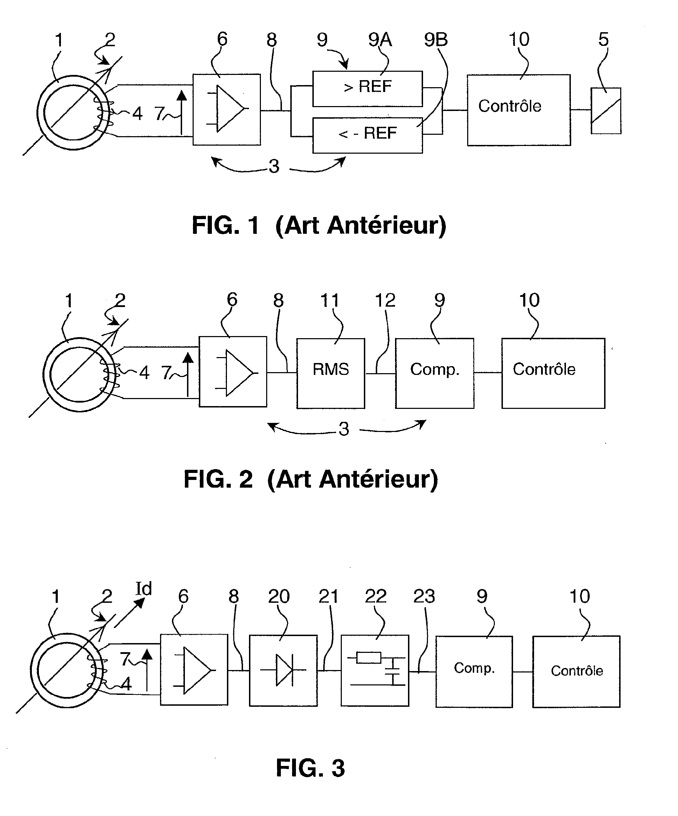

Des dispositifs de protection différentielle connus, comme ceux représentés sur les figures 1 et 2, comportent généralement un tore 1 de mesure entourant des conducteurs primaires 2 d'une ligne à protéger. Ces dispositifs comportent aussi un circuit électronique 3 connecté à un enroulement secondaire 4 dudit tore pour traiter la commande d'un relais de déclenchement 5 de l'ouverture de contacts principaux.

Généralement, les dispositifs de protection différentielle fonctionnent selon une détection crête du signal. Ainsi, dans l'exemple de la figure 1, un amplificateur 6 connecté à l'enroulement 4 du tore 1 reçoit un signal 7 représentatif d'un courant de défaut différentiel se produisant dans un circuit des conducteurs primaires. En sortie de l'amplificateur, un signal amplifié 8 est appliqué à un comparateur 9. Ce comparateur peut être simple ou double comme représenté sur la figure 1. Si le signal est alternatif, une première partie du comparateur 9A compare l'alternance positive à une première référence et une seconde partie 9B compare l'alternance négative à une seconde référence de polarité inversée à celle de la première référence. La sortie du comparateur est appliquée à l'entrée d'un circuit de contrôle 10 pour contrôler le déclenchement, notamment en fonction de la durée de dépassement des références dans les comparateurs. Cependant, avec une détection crête du signal, les seuils de déclenchements sont très différents selon la forme du signal. Puisque les seuils de déclenchement sont exprimés en valeurs efficaces, des écarts importants peuvent se produire. Il est possible de recentrer les références des comparateurs de manière à passer un maximum de formes de signal mais avec cette solution les formes en impulsions détectées conduisent à des seuils de déclenchement trop bas.

Dans le dispositif représenté sur la figure 2, la détection se fait en valeur efficace, elle permet de résoudre en partie les problèmes du mode de réalisation en détection crête. Dans ce cas, un module 11 connecté entre l'amplificateur 6 et le comparateur 9 permet de fournir au comparateur 9 un signal 12 représentatif d'une valeur efficace du signal 8 en sortie de l'amplificateur. Ce système permet de résoudre les problèmes liés aux formes de courant en impulsions mais provoque des erreurs de détection lorsque le courant de défaut primaire comporte une composante continue. Cette composante continue est présente lorsque le signal primaire est un signal redressé ou à une seule alternance, ou lorsqu'un courant continu se superpose à un courant alternatif ou redressé, ou à une seule alternance.

Ces problèmes de détection sont notamment dus au fait que le tore 1 laisse passer un signal variable mais bloque les composantes continues. Ensuite, la détection d'une valeur efficace d'un tel signal modifié altère la précision de la détection. Ainsi, les défauts à composante continue sont sous détectés ce qui à pour effet une augmentation des seuils de déclenchement.

Ainsi, les dispositifs connus fonctionnant en valeur crête et en valeurs efficaces produisent des écarts de seuils trop importants pour pouvoir passer des formes de signaux très diverses notamment des formes en impulsions et des formes comportant une composante continue.

### EXPOSE DE L'INVENTION

L'invention a pour but un dispositif de protection différentielle amélioré pouvant avoir une précision de déclenchement élevée avec plusieurs types de forme de courant de défaut différentiel.

Un dispositif de protection différentielle selon l'invention comporte des moyens de redressement recevant au moins un signal représentatif d'un courant différentiel, des moyens de filtrage connectés aux moyens de redressement pour filtrer un signal redressé fourni par les moyens de redressement et pour fournir un signal redressé filtré audits moyens de comparaison.

Avantageusement, les moyens de filtrage comportent un filtre passe bas ayant une fréquence de coupure comprise entre 2 et 4 fois la fréquence fondamentale d'un réseau électrique.

Dans un mode de réalisation préférentiel, le dispositif comporte un circuit intégré comportant :
- un amplificateur recevant des signaux d'entrée,
- un redresseur de signal connecté en sortie de l'amplificateur,
- au moins une première partie des moyens de filtrage connectée en sortie de l'amplificateur et comportant une sortie de filtrage,
- un comparateur connecté à ladite première partie des moyens de filtrage,
- des moyens de commande comportant un temporisateur pour contrôler des temps de déclenchement et de non-déclenchement connecté en sortie dudit comparateur, et
- une sortie de commande de déclenchement connecté en sortie des moyens de commande.

Dans un mode de réalisation particulier, les moyens de filtrage comportent une première partie interne à élément résistif disposée dans un circuit intégré et une seconde partie externe à élément capacitif disposée à l'extérieure dudit circuit intégré et connectée à la partie interne par l'intermédiaire d'une sortie de filtrage.

De préférence, les moyens de filtrage comportent une première partie interne comportant deux circuits tampons pour commander un miroir de courant destiné à référencer un signal de filtrage à une ligne d'alimentation ou à une ligne de référence.

Un appareil de coupure électrique selon un mode réalisation de l'invention comporte des conducteurs principaux et des contacts connectés en série, un tore de mesure de courant différentiel entourant les conducteurs principaux, un relais de déclenchement de l'ouverture desdits contacts principaux et un dispositif de protection différentielle tel que défini ci-dessus connecté au tore de mesure et au relais de déclenchement.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- les figures 1 et 2 représentent des schémas de dispositifs de protection différentielle de l'état de la technique ;
- la figure 3 représente un schéma d'un dispositif de protection différentielle selon un premier mode de réalisation de l'invention ;
- les figures 4A, 4B, 4C, 4D et 4E illustrent des courbes pouvant être utilisées dans des dispositifs selon l'invention ;
- la figure 5 représente un schéma d'un appareil de coupure comportant un dispositif de protection différentielle selon un mode de réalisation de l'invention ;
- la figure 6 représente un schéma d'un circuit utilisé dans un dispositif de protection différentielle selon un mode de réalisation de l'invention ;
- la figure 7 représente un schéma d'un dispositif de protection différentielle selon un second mode de réalisation de l'invention.

### DESCRIPTION DETAILLEE DE MODES DE REALISATION PREFERES

Un dispositif de protection différentielle, selon un mode de réalisation de l'invention représenté sur la figure 3, permet d'avoir une grande précision de seuil de déclenchement pour plusieurs types de courbes de courant de défaut différentiel. Le dispositif comporte un tore 1 entourant des conducteurs primaires 2 dans lesquels peut circuler un courant de défaut différentiel Id. Un enroulement 4 secondaire du tore est connecté à un amplificateur 6 pour fournir un signal 7 représentatif du courant différentiel Id. L'amplificateur 6 amplifie le signal d'entrée et fournit un signal 8 amplifié à un redresseur électronique 20. Le signal 8 est redressé par le redresseur 20 pour fournir un signal redressé à un filtre 22 adapté à un ensemble de courbes de signaux de défaut définies et à la fréquence d'un réseau de distribution électrique sur lequel les conducteurs principaux sont raccordés. Le filtre 22 fournit un signal filtré 23 à un circuit de comparaison 9 qui compare le signal 23 à une référence et fournit un signal de détection au circuit de contrôle 10.

De préférence, le filtre 22 est un filtre passe bas dont la fréquence de coupure est comprise entre 2 et 4 fois la fréquence fondamentale d'un réseau électrique. Avantageusement, la fréquence de coupure est comprise entre 100 Hz et 200 Hz pour un réseau à 50 Hz et entre 120 Hz et 240 Hz pour un réseau à 60 Hz.

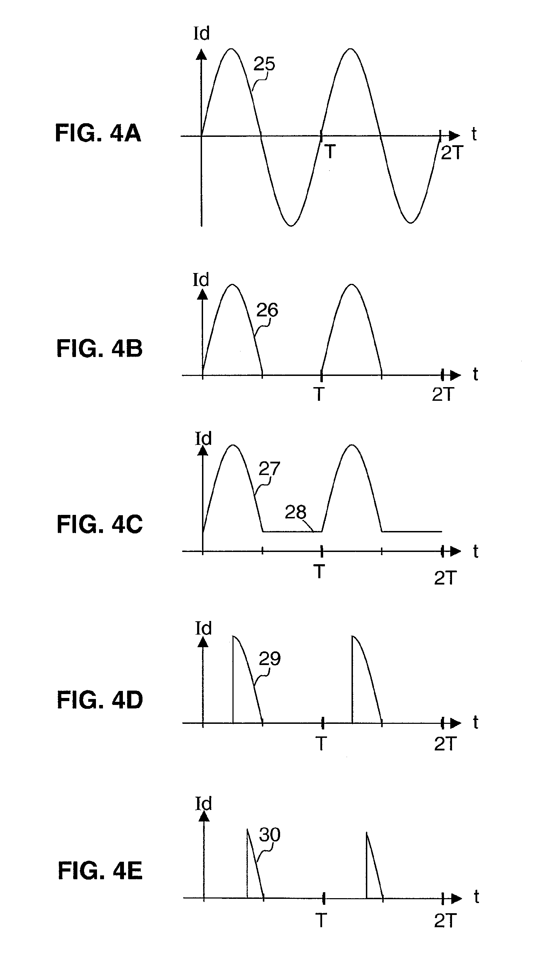

Les figures 4A, 4B, 4C, 4D et 4E illustrent des courbes pouvant être utilisées dans des dispositifs selon l'invention avec de bonnes précisions de seuil de détection. Sur la figure 4A, une courbe 25 est une courbe de sinusoïdale servant de référence où la précision doit être la plus élevée. Une période T de la courbe correspond à la fréquence du réseau de distribution électrique. Sur la figure 4B, une courbe 26 est une courbe de sinusoïde redressée simple alternance. Sur la figure 4C, une courbe 27 est une courbe de sinusoïde redressée simple alternance sur laquelle s'ajoute une composante continue supplémentaire 28. Les courbes 26, 27 présentent des composantes continues dues à leur polarité unique. Ces courbes provoquent des erreurs de détection importantes dans des dispositifs où le tore est associé à un module de valeur efficace.

Sur la figure 4D, une courbe 29 est une courbe de portion de sinusoïde redressée simple demi-alternance ou tronquée à 90 degrés. Sur la figure 4E, une courbe 30 est une courbe de portion de sinusoïde redressée quart de simple alternance ou tronquée à 135 degrés. Les courbes 29 et 30 présentent des pics importants. Ces courbes provoquent des erreurs de détection importante dans des dispositifs à détection crête.

Dans un dispositif selon des modes de réalisation de l'invention, l'association d'un redresseur et d'un filtre adapté permet de tenir compte de la composante continue et d'atténuer les pics des impulsions pour un ensemble de courbes important.

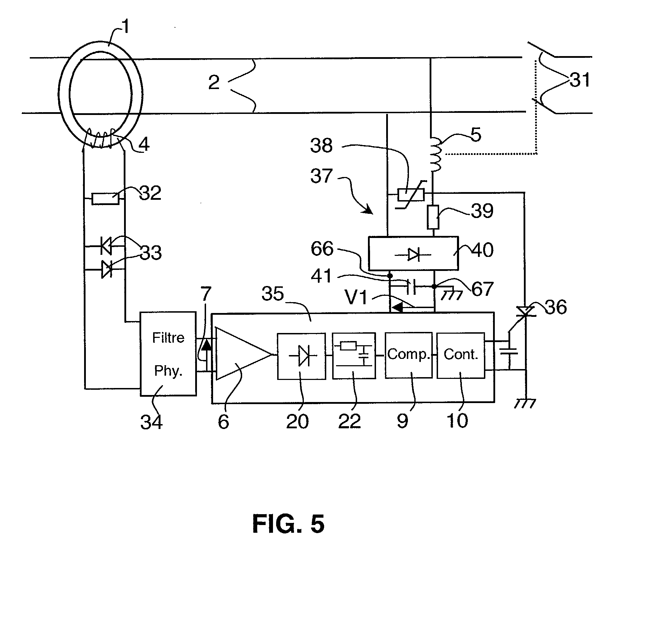

La figure 5 représente un schéma d'un appareil de coupure comportant un dispositif de protection différentielle selon un mode de réalisation de l'invention. Le tore 1 entoure des conducteurs principaux 2 connectés en série avec des contacts principaux 31. l'enroulement secondaire 4 du tore est connecté à une résistance de charge 32 et à des diodes de protection connectées en tête bêche. Le signal alternatif en sortie de l'enroulement est aussi appliqué à un filtre physiologique 34 optionnel. Ce filtre à une réponse en fréquence proche de celle du corps humain. En sortie du filtre 34 ou directement depuis le tore, un signal 7 est appliqué à l'entrée d'un circuit de traitement 35. Ce circuit de traitement comporte l'amplificateur 6 recevant de signal 7, le redresseur 20 connecté à l'amplificateur, le filtre adapté 22 connecté au redresseur, le comparateur 9 connecté au filtre 22, et le circuit de contrôle 10 connecté au comparateur 9. Le circuit de contrôle 10 a une sortie pour commander un thyristor 36 et alimenter le relais de déclenchement 5. Le circuit 35 peut être notamment un circuit intégré. Une alimentation électrique connectée aux conducteurs principaux 2 permet d'alimenter l'ensemble des circuits électroniques. L'alimentation se fait à travers le relais 5 qui opère aussi une chute de tension. Une varistance 38 disposée en aval de la bobine du relais 5 protège les circuits électroniques contre des surtensions. Ensuite, une résistance 39, un redresseur 40, et un condensateur 41 permettent respectivement de faire chuter la tension, de redresser le courant alternatif et de filtrer une tension d'alimentation V1 du circuit électronique 35.

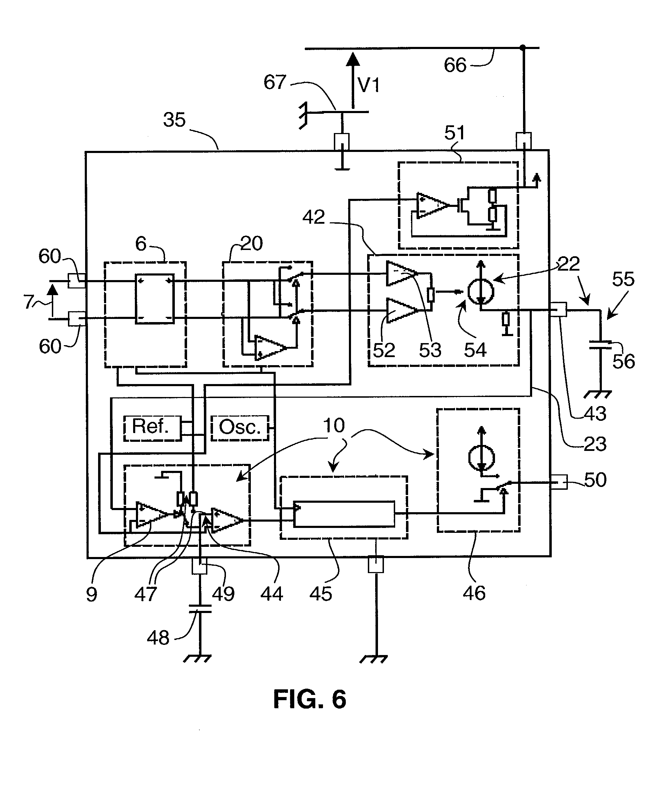

La figure 6 représente un schéma détaillé d'un circuit 35 utilisé dans un dispositif de protection différentielle selon un mode de réalisation de l'invention. Le circuit 35 peut être un circuit intégré comportant un amplificateur 6 recevant des signaux d'entrée 7, un redresseur 20 de signal connecté en sortie de l'amplificateur 6, au moins une première partie 42 du filtre adapté 22 connecté, en sortie du redresseur et comportant une sortie de filtrage 43, un comparateur 9 connecté à ladite première partie du filtre adapté, et des circuits de traitement 44, 45, et 46. Parmi les circuits de traitement, un temporisateur 44 comporte une partie résistive et un comparateur internes au circuit 35 et partie capacitive telle qu'un condensateur 48 externe au circuit 35 connecté par une sortie 49. Un circuit programmable 45 connecté au circuit de temporisation permet de traiter le temps de déclenchement et de non-déclenchement, et permet de commander un circuit de sortie 46 connecté à une de sortie 50.

Le circuit 35 comporte aussi un régulateur d'alimentation 51 pour fournir une alimentation régulée aux différents circuits internes au circuit 35. La première partie 42 du filtre adapté 22 comporte des amplificateurs tampons 52 et 53, et un miroir de courant pour référencer le signal de filtrage 23 à une ligne 66 d'alimentation ou à une ligne de référence 67 de l'alimentation. Le filtre adapté 22 comporte une seconde partie capacitive externe 55 représentée par un condensateur 56 connecté à la sortie de filtrage 43. La valeur du condensateur permet d'adapter la fréquence de coupure du filtre en fonction de la fréquence du réseau ou du type de courbes de courant de défaut à détecter.

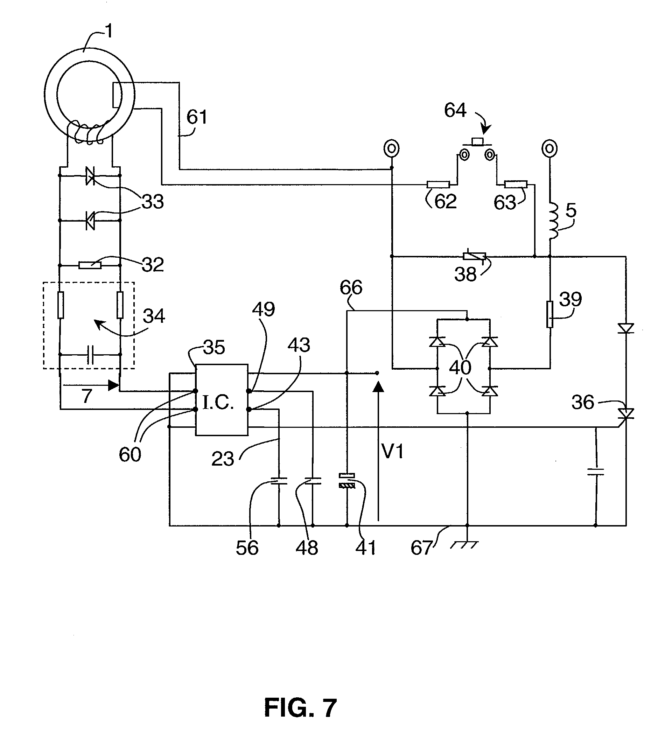

La figure 7 représente un schéma d'un dispositif de protection différentielle selon un mode de réalisation à circuit intégré. Le circuit intégré 35 comporte deux entrées pour recevoir le signal 7, une sortie de filtrage 43 sur laquelle est connecté le condensateur 56 de filtrage, et une sortie 49 sur laquelle est connecté le condensateur de temporisation 48.

Sur ce schéma, le dispositif de protection différentielle comporte un circuit de test comportant un conducteur 61 passant en boucle à l'intérieur du tore et connectée en série avec des résistances 62 et 63 de limitation de courant, et un bouton poussoir 64. L'ensemble est connecté comme le circuit d'alimentation 37 en aval du relais de déclenchement 5.

Dans les modes de réalisation décrits ci-dessus le filtre adapté est représenté comme un filtre du premier ordre de type résistance condensateur mais d'autres types de filtre peuvent convenir notamment des filtres du second ordre ou des filtres numériques.

## Revendications

1. Dispositif de protection différentielle comportant :
- une entrée destinée à être connectée à un tore (1) de mesure de courant différentiel (Id),
- des moyens de comparaison (9, 9A, 9B) pour comparer un signal (8) représentatif d'un courant différentiel à un seuil de référence, et
- des moyens de traitement (10) pour commander un relais (5) de déclenchement de l'ouverture de contacts principaux (3) lorsqu'un défaut différentiel est détecté,
dispositif **caractérisé en ce qu'**il comporte des moyens (20) de redressement recevant au moins un signal (8) représentatif d'un courant différentiel (Id), des moyens (22, 43, 54, 55, 56) de filtrage connectés aux moyens de redressement pour filtrer un signal (21) redressé fourni par les moyens de redressement et pour fournir un signal (23) redressé filtré audits moyens de comparaison (9).

2. Dispositif selon la revendication 1 **caractérisé en ce que** les moyens (22, 43, 54, 55, 56) de filtrage comportent un filtre passe bas ayant une fréquence de coupure comprise entre 2 et 4 fois la fréquence fondamentale d'un réseau électrique.

3. Dispositif selon l'une des revendications 1 ou 2 **caractérisé en ce qu'**il comporte un circuit intégré (35) comportant :
- un amplificateur (6) recevant des signaux d'entrée,
- un redresseur (20) de signal connecté en sortie de l'amplificateur,
- au moins une première partie (54) des moyens de filtrage (22) connectée en sortie de l'amplificateur et comportant une sortie (43) de filtrage,
- un comparateur (9) connecté à ladite première partie des moyens de filtrage,
- des moyens (10) de commande comportant un temporisateur (44) pour contrôler des temps de déclenchement et de non-déclenchement connecté en sortie dudit comparateur, et
- une sortie de commande (50) de déclenchement connecté en sortie des moyens de commande.

4. Dispositif selon l'une quelconque des revendications 1 à 3 **caractérisé en ce que** les moyens de filtrage (22) comportent une première partie (42) interne à élément résistif (54) disposée dans un circuit intégré (35) et une seconde partie (55) externe à élément capacitif (56) disposée à l'extérieure dudit circuit intégré et connectée à la partie interne par l'intermédiaire d'une sortie (43) de filtrage.

5. Dispositif selon la revendication 4 **caractérisé en ce que** les moyens de filtrage (22) comportent une première partie interne (42) comportant deux circuits tampons (52, 53) pour commander un miroir de courant destiné à référencer un signal de filtrage (23) à une ligne (66) d'alimentation ou à une ligne (67) de référence.

6. Appareil de coupure électrique comportant des conducteurs principaux (2) et des contacts (31) connectés en série, un tore (1) de mesure de courant différentiel (Id) entourant les conducteurs principaux, et un relais (5) de déclenchement de l'ouverture desdits contacts principaux **caractérisé en ce qu'**il comporte un dispositif de protection différentielle selon l'une quelconque des revendications 1 à 5 connecté au tore (1) de mesure et au relais (5) de déclenchement.
